# EUROPÄISCHE PATENTSCHRIFT

(11) **EP 0 722 760 B1**
(45) Veröffentlichungstag und Bekanntmachung des Hinweises auf die Patenterteilung: **18.08.1999**
(21) Anmeldenummer: 96100251.6
(22) Anmeldetag: 10.01.1996
(51) Int. Cl.: B01D 29/15, B01D 29/48, B01D 29/64, B01D 29/68, B01D 29/90

(54) **Kantenspaltfilter für Flüssigkeiten**
Edge filter for liquids
Filtre à arêtes pour liquides

(30) Priorität: 23.01.1995 DE 19501896
(43) Veröffentlichungstag der Anmeldung: 24.07.1996
(73) Patentinhaber: KNECHT FILTERWERKE GMBH, 70376 Stuttgart (DE)
(72) Erfinder: Geisbauer, Heinz, D-74629 Untersteinbach (DE)
(74) Vertreter: Patentanwalts-Partnerschaft Rotermund + Pfusch

(56) Entgegenhaltungen:
- EP-A- 0 267 014
- EP-A- 0 577 941
- US-A- 1 471 807
- US-A- 4 298 465

## Beschreibung

Die Erfindung bezieht sich auf ein Kantenspaltfilter für Verunreinigungen enthaltende Flüssigkeiten nach dem Oberbegriff des Anspruchs 1. Bei einem solchen Filter ist die Außenfläche des Kantenspaltfilterkörpers durch Relativbewegung gegenüber einem Reinigungselement von abgelagerten Verunreinigungen abreinigbar.

Bei einem bekannten Kantenspaltfilter dieser Art (DE 42 22 495 C2) können sich gröbere Verunreinigungen, wie Drahtstücke oder Späne, die insbesondere in verunreinigten Kühl-Schmierstoff-Suspensionen auftreten können, auf der unmittelbar angeströmten Außenfläche des Kantenspaltfilterkörpers in dessen Spalten festsetzen mit der Folge, daß ein hier erforderliches Drehen des Kantenspaltfilterkörpers zum Abreinigen von dessen Außenfläche mittels Abstreifer und Rückspülkanal nicht möglich ist.

Bei einer Filtereinrichtung nach US 1,471,807 dient ein Tauchrohr als Vorabscheider dazu, einen nachfolgenden, innerhalb des Filtergehäuses nicht abreinigbaren Filterkörper möglichst lange betriebsbereit zu halten. Die Dauer der Betriebsbereitschaft eines solchen Filters wird durch die Menge der Ablagerungen auf dem Filterkörper bestimmt. Gelingt es, auf den Filterkörper nur einen Teil der insgesamt in dem Filter abgetrennten Verunreinigungen anlagern zu lassen, so wird hierdurch die Betriebsstandzeit des Filters in demjenigen Maße erhöht, in dem Anlagerungen an Verunreinigungen mengenmäßig vermieden werden können.

Ähnliches gilt mit Bezug auf Filtereinrichtungen, die aus US 4,298,465 und EP 0 2967 014 A2 bekannt sind. Jene Filtereinrichtungen betreffen jeweils Kraftstoffilter, in denen Wasser aus dem Kraftstoff vor dem Auftreffen auf den eigentlichen Filterkörper abgeschieden werden soll. Allein für diese Wasserabscheidung dienen die dortigen Tauchrohre, durch die eine Art Zyklonströmung zur Wasserabscheidung vor dem eigentlichen Filterkörper erzeugt wird.

Aufgabe der Erfindung ist es, mittels einer Vorabscheidung eines größeren Teiles der Verunreinigungen sowie gröberer Verunreinigungen und einer Vermeidung einer unmittelbaren Anströmung der Außenfläche des Kantenspaltfilterkörpers durch die Flüssigkeit mit Verunreinigungen Störungen beim Abreinigen der Außenfläche des Kantenspaltfilterkörpers zu vermeiden. Solche Störungen können durch ein Verklemmen der abzutrennenden Verunreinigungen an der Abkratzeinrichtung auftreten.

Diese Aufgabe ist bei einem Kantenspaltfilter der eingangs genannten Art durch eine Ausführung mit den kennzeichnenden Merkmalen des Anspruches gelöst.

Durch die Ringströmung und die damit verbundene Zyklonwirkung, der die einströmende Flüssigkeit mit Verunreinigungen ausgesetzt ist, werden gröbere Verunreinigungen in dem äußeren Bereich des Einströmraumes unmittelbar abgeschieden, und durch das Tauchrohr wird ein unmittelbares Anströmen der Außenfläche des Kantenspaltfilterkörpers durch zumindest die Flüssigkeit mit sämtlichen Verunreinigungen verhindert. Dadurch können sich auf der Außenfläche des Kantenspaltfilterkörpers gröbere Verunreinigungen nicht festsetzen, da sie in der Ringströmung nach außen an die Innenfläche des Filtergehäuses getragen werden und von dort nach unten absinken können. Diese vorabgeschiedenen Teilchen sammeln sich im Bereich des unteren Endes des Filtergehäuses an. Die Flüssigkeit mit verbleibenden feineren nicht vorabgeschiedenen Verunreinigungen umströmt das untere Ende des Tauchrohres, das als Abscheidekante für weitere Verunreinigungen wirkt, die aus der außerhalb des Tauchrohres abwärts und innerhalb desselben aufwärts tangential strömenden Flüssigkeit abgeschieden werden. Die Flüssigkeit gelangt dann auf die Außenfläche des Kantenspaltfilterkörpers, auf der sich die verbleibenden feineren Verunreinigungen ablagern. Nur die von Verunreinigungen befreite Flüssigkeit gelangt durch den Kantenspaltfilterkörper hindurch in den Abströmraum.

Bei Einsatz eines kreiszylindrischen, um seine Achse drehantreibbaren Kantenspaltfilterkörpers kann zum Abreinigen seiner Außenfläche ein sich über dessen Höhe erstreckender und an diesem anliegender, in dem Filtergehäuse ortsfest gelagerter Rückspülkanal und/oder ein sich über die gleiche Höhe erstreckender und an diesem anliegender, in dem Filtergehäuse ortsfest gelagerter Abstreifer vorgesehen sein. Die Ausgestaltung und Wirkung dieser Mittel zum Abreinigen der Außenfläche des Kantenspaltfilterkörpers sind an sich bekannt.

In der Zeichnung ist ein Ausführungsbeispiel eines Kantenspaltfilters nach der Erfindung dargestellt, und zwar zeigen
- Fig. 1: einen lotrechten Mittelschnitt,
- Fig. 2: einen Schnitt entlang der Linie II-II in Fig. 1.

In einem stehenden kreiszylindrischen Filtergehäuse 1 ist ein ebenfalls kreiszylindrischer Kantenspaltfilterkörper 2 koaxial angeordnet. Der Kantenspaltfilterkörper 2 trennt gemeinsam mit einer unteren Abdeckung 3 und einer oberen Abdeckung 4 einen äußeren Zuströmraum 5 mit Zuströmeinlaß 6 von einem inneren Abströmraum 7 mit Abströmauslaß 8. Der Abströmraum 7 besteht aus einem unteren, innerhalb des Kantenspaltfilterkörpers 2 liegenden Teil und einem oberhalb der oberen Abdeckung 4 innerhalb des Filtergehäuses 1 liegenden, oberen Teil, wobei die beiden Teile des Abströmraumes 7 durch einen Durchbruch in der oberen Abdeckung 4 miteinander in Verbindung stehen. Der Abströmauslaß 8 geht von dem oberen Teil des Abströmraumes 7 aus. Das untere Ende des Filtergehäuses 1 verengt sich konisch zu einem Auslaß 9 für abgeschiedene Verunreinigungen.

In dem Filtergehäuse 1 ist koaxial zu und beabstandet von der Innenfläche des Filtergehäuses 1 und der Außenfläche des Kantenspaltfilterkörpers 2 ein kreiszylindrisches Tauchrohr 10 angeordnet, das an der Unterseite der oberen Abdeckung 4 befestigt ist und nach unten bis in den Bereich des unteren Endes des Kantenspaltfilterkörpers 2 ragt. Der Zuströmeinlaß 6 mündet tangential in das Filtergehäuse 1 in dem oberen Bereich des Zuströmraumes 5 nahe der oberen Abdeckung 4 ein, wodurch sich eine insbesondere gröbere Verunreinigungen aus der einströmenden Flüssigkeit abscheidende Ringströmung mit Zyklonwirkung ergibt, so daß die abgeschiedenen Verunreinigungen unmittelbar zum unteren Ende des Filtergehäuses 1 absinken. Die Flüssigkeit mit den insbesondere feineren nicht vorabgeschiedenen Verunreinigungen umströmt das untere Ende des Tauchrohres 10 nach innen und beaufschlagt die Außenfläche des Kantenspaltfilterkörpers 2.

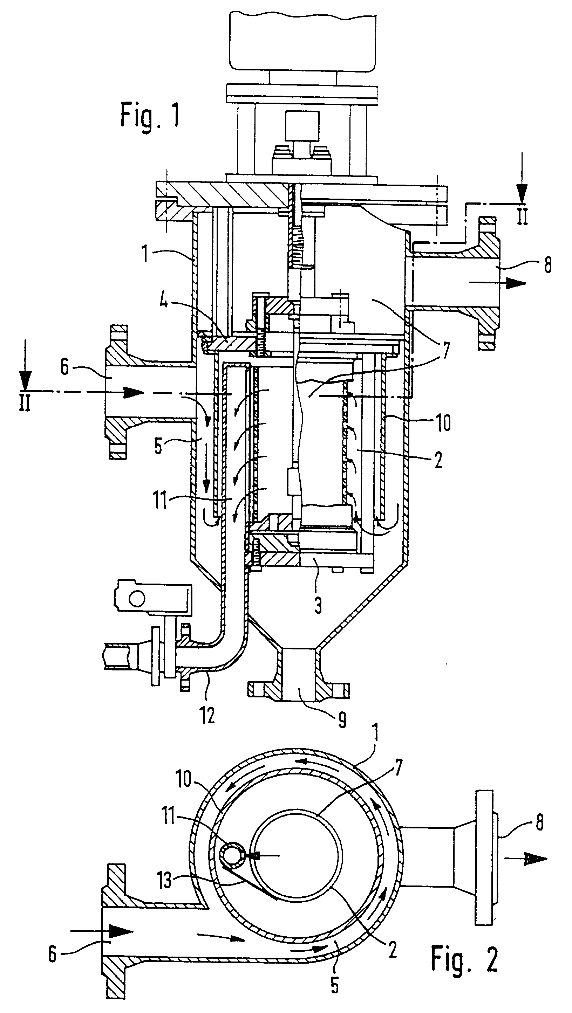

Im rechten Teil der Fig. 1 ist durch die eingezeichneten Pfeile der Betriebszustand dargestellt, bei dem Flüssigkeit von dem inneren Bereich des Zuströmraumes 5 durch den Kantenspaltfilterkörper 2 zu dem unteren Teil des Abströmraumes 7 fließt, wobei sich auf der Außenfläche des Kantenspaltfilterkörpers 2 Verunreinigungen ablagern. Im linken Teil der Fig. 1 ist durch die eingezeichneten Pfeile der Betriebszustand dargestellt, bei dem Flüssigkeit aus dem unteren Teil des Abströmraumes 7 durch den Kantenspaltfilterkörper 2 hindurch in einen Rückspülkanal 11 gefördert wird, wodurch auf der Außenfläche des Kantenspaltfilterkörpers 2 abgelagerte Verunreinigungen gelöst werden und in den Rückspülkanal 11 zur Ableitung durch das Ablaufrohr 12 gelangen. Der Rückspülkanal 11 liegt über die Höhe des Kantenspaltfilterkörpers 1 an dessen Außenfläche an. Rückspülkanal 11 und Ablaufrohr 12 sind ortsfest in dem Filtergehäuse 1 gelagert.

Außerdem ist ein sich über die Höhe des Kantenspaltfilterkörpers 2 erstreckender Abstreifer 13 vorgesehen, der an der Außenfläche des Kantenspaltfilterkörpers 2 anliegt und ortsfest in dem Filtergehäuse 1 gelagert ist. Mittels des Abstreifers 13 von der Außenfläche des Kantenspaltfilterkörpers 2 abgeschabte Verunreinigungen sinken zu dem unteren Ende des Filtergehäuses 1 ab.

Rückspülkanal 11 und Abstreifer 13 wirken dadurch über den gesamten Umfang der Außenfläche des Kantenspaltfilterkörpers 2, wobei letzterer drehbar in dem Filtergehäuse 1 gelagert und mit einem Drehantrieb verbunden ist.

## Patentansprüche

1. Kantenspaltfilter für Verunreinigungen enthaltende Flüssigkeiten, insbesondere verunreinigte Kühl-Schmierstoff-Suspensionen, mit einem stehenden, kreiszylindrischen Filtergehäuse, in dem ein kreiszylindrischer Kantenspaltfilterkörper stehend angeordnet ist, der zusammen mit an dessen oberem Ende und an dessen unterem Ende vorgesehenen Abdeckungen einen äußeren Zuströmraum mit Zuströmeinlaß von einem inneren Abströmraum mit Abströmauslaß trennt, wobei die Außenfläche des Kantenspaltfilterkörpers durch Relativbewegung gegenüber einem Reinigungselement von abgelagerten Verunreinigungen abreinigbar ist, und wobei das untere Ende des Filtergehäuses mit einem schließbaren Auslaß für abgeschiedene Verunreinigungen versehen ist,
**dadurch gekennzeichnet**,
daß der Zuströmeinlaß (6) in dem oberen Bereich des Zuströmraumes (5) tangential in das Filtergehäuse (1) einmündet, und daß von der am oberen Ende des Kantenspaltfilterkörpers (2) vorgesehenen Abdeckung (4) von der Innenfläche des Filtergehäuses (1), der Außenfläche des Kantenspaltfilterkörpers (2) und des Rückspülkanales (12) des Reinigungselementes beabstandet ein kreiszylindrisches Tauchrohr (10) bis maximal in den Bereich des unteren Endes des Kantenspaltfilterkörpers (2) nach unten ragt, wobei das Tauchrohr (10) mindestens eine zur Ausbildung einer, eine Vorabscheidung von Verunreinigungsteilen durch Zentrifugalkräfte bewirkenden Ringströmung ausreichende Länge aufweist.

## Claims

1. Edge filter for contaminant-containing liquids, in particular contaminated cooling lubricant suspensions, with a vertical circular cylindrical filter housing in which is vertically arranged a circular cylindrical edge filter body which, together with covers provided at its upper end and its lower end, divides an external feed chamber with feed inlet from an internal discharge chamber with discharge outlet, wherein the external surface of the edge filter body can be cleaned of deposited contaminants by movement relative to a cleaning element and wherein the lower end of the filter housing is provided with a closable outlet for separated contaminants, characterised in that the feed inlet (6) in the upper region of the feed chamber (5) opens tangentially into the filter housing (1) and in that from the cover (4) provided at the upper end of the edge filter body (2) a circular cylindrical submerged pipe (10) spaced from the internal surface of the filter housing (1), the external surface of the edge filter body (2) and the reflux channel (12) of the cleaning element projects downwardly at most into the lower end region of the edge filter body (2), the submerged pipe (10) having at least a length adequate to form an annular flow which effects preliminary separation of contaminant particles by centrifugal forces.

## Revendications

1. Filtre à fentes pour liquides contenant des impuretés, en particulier pour suspensions de lubrifiants de refroidissement souillées, comportant un boîter cylindrique de révolution vertical dans lequel est placé verticalement un corps filtrant à fentes cylindrique de révolution qui, conjointement avec des couvercles prévus à son extrémité supérieure et à son extrémité inférieure, sépare un espace d'arrivée extérieur à entrée d'arrivée d'un espace de départ intérieur à sortie de départ, la face extérieure du corps filtrant à fentes pouvait être débarrassée des impuretés déposées par mouvement relatif par rapport à un élément de nettoyage, et l'extrémité inférieure du boîtier de filtre étant pourvue d'une sortie obturable pour les impuretés séparées,
caractérisé par le fait
que l'entrée d'arrivée (6) débouche tangentiellement dans le boîtier de filtre (1) dans la partie supérieure de l'espace d'arrivée (5), et qu'un tube plongeur cylindrique de révolution (10) descend du couvercle (4) prévu à l'extrémité supérieure du corps filtrant à fentes (2), à distance de la face intérieure du boîtier de filtre (1), de la face extérieure du corps filtrant à fentes (2) et de la face extérieure du conduit de rinçage (11) de l'élément de nettoyage, jusqu'au plus dans la zone de l'extrémité inférieure du corps filtrant à fentes (2), le tube plongeur (10) ayant au moins une longueur suffisante pour la formation d'un écoulement circulaire produisant une séparation préalable de parties des impuretés par des forces centrifuges.
